# EUROPEAN PATENT SPECIFICATION

(11) **EP 4 397 535 B1**
(45) Date of publication and mention of the grant of the patent: **22.04.2026**
(21) Application number: 22862829.3
(22) Date of filing: 24.06.2022
(51) Int. Cl.: B60N 2/28

(54) **SEAT ROTATION ADJUSTMENT STRUCTURE AND CHILD SAFETY SEAT**
SITZDREHUNGSVERSTELLUNGSSTRUKTUR UND KINDERSICHERHEITSSITZ
STRUCTURE DE RÉGLAGE DE ROTATION DE SIÈGE ET SIÈGE DE SÉCURITÉ ENFANT

(30) Priority: 02.09.2021 CN 202122108810 U
(43) Date of publication of application: 10.07.2024
(73) Proprietor: Ningbo Baby First Baby Products Co., Ltd., Ningbo, Zhejiang 315412 (CN)
(72) Inventor: ZHOU, Xiaolin, Ningbo, Zhejiang 315412 (CN)
(74) Representative: Lorenz Seidler Gossel Part. mbB
(86) International application number: PCT/CN2022/101085
(87) International publication number: WO 2023/029688

(56) References cited:
- CN-U- 207 931 539
- CN-U- 209 240 929
- CN-U- 210 591 512
- CN-U- 214 057 313
- CN-U- 216 153 636
- JP-A- H10 229 931
- JP-U- H04 124 530
- US-B1- 6 199 949

## Description

### TECHNICAL FIELD

The present invention relates to the technical field of child safety seats, and particularly to a seat rotation adjustment structure, and a child safety seat including the same.

### BACKGROUND

With the improvement of people's awareness of driving safety, more attention is being paid to the safety of children during driving. Child safety seats specially designed for children can effectively restrain children and greatly improve the safety of children during driving. In order to adapt to children of more ages, child safety seats are designed as rotatable structures in the prior art, so that the child safety seats can be rotated 90° or 180°. However, most of the existing seat rotation locking structures for child safety seats involve a complicated structure, high manufacturing costs, and inconvenient rotation operations. The utility model CN 207 931 539 U shows an example of a seat rotation adjustment structure according to the prior art.

### SUMMARY

To solve at least one of the above problems, the present invention first provides a seat rotation adjustment structure, including a base and a rotary disc rotatably connected to the base, where a release handle assembly is mounted on the base; the release handle assembly includes a handle body, a positioning plate, and a first reset member; the handle body is connected to the base in a forward and backward movable manner; a front end of the positioning plate is hingedly connected to the handle body, and a rear end of the positioning plate is connected to the first reset member; an accommodating space configured for restricting a movement of the positioning plate is formed between the rotary disc and the base; a plurality of positioning grooves configured for engaging with the positioning plate are provided on the rotary disc; when the positioning plate is aligned with a positioning groove of the positioning grooves, the positioning plate is pushed by the handle body and the first reset member to lock to the positioning groove; and after the handle body is pulled forward to allow the positioning plate to disengage from the positioning groove, the positioning plate completely enters the accommodating space, to achieve a rotation of the rotary disc relative to the base.

Optionally, a recessed groove configured for mounting the positioning plate is provided on the handle body, and an upper end and a lower end of the first reset member are respectively pressed against the positioning plate and a bottom of the recessed groove.

Optionally, the release handle assembly further includes a rotating shaft, and the positioning plate is hingedly connected to the handle body through the rotating shaft.

Optionally, a sliding groove is provided on the handle body, and a protruding column configured for engaging with the sliding groove is arranged on the base.

Optionally, the protruding column is connected to a fastener configured for limiting a vertical movement of the handle body.

Optionally, a second reset member configured for pushing the handle body to move backward is arranged between the handle body and the base.

Optionally, a handle groove is provided at a front end of the handle body, and a window configured for exposing the handle groove is provided on the base.

Optionally, a brim is arranged on a peripheral wall of the rotary disc, and the accommodating space is formed between the brim and the base.

Optionally, a distance between the brim and the base gradually decreases from a rear end to a front end.

Compared with the prior art, in the seat rotation adjustment structure of the present invention, the release handle assembly is arranged on the base, the plurality of positioning grooves configured for engaging with the positioning plate of the release handle assembly are arranged on the rotary disc, and through the movement of the handle body and the restriction of the movement of the positioning plate by the accommodating space, the positioning plate can be locked to or disengaged from a positioning groove of the positioning grooves, so that the position of the rotary disc can be changed to achieve seat rotation and locking. Such a design involves a simple structure, a small number of parts, and low improvement costs, and is suitable for use in a wide range of applications for improvement. In addition, rotation and locking operations are convenient and stable, so that high operation efficiency is achieved, thereby improving user experience.

In addition, the present invention provides a child safety seat, including the seat rotation adjustment structure described above.

Compared with the prior art, the child safety seat of the present invention has the same advantages as those of the seat rotation adjustment structure compared with the prior art, so no more details will be described herein.

### BRIEF DESCRIPTION OF THE DRAWINGS

FIG. 1 is a structural view of a release handle assembly according to an embodiment of the present invention.
FIG. 2 is a cross-sectional view of a release handle assembly according to an embodiment of the present invention.
FIG. 3 is a cross-sectional view of a child safety seat facing forward in a locked state according to an embodiment of the present invention.
FIG. 4 is an enlarged view of part A in FIG. 3.
FIG. 5 is an enlarged view of part B in FIG. 3.
FIG. 6 is a cross-sectional view of a child safety seat with a positioning plate being disengaged from a positioning groove according to an embodiment of the present invention.
FIG. 7 is an enlarged view of part C in FIG. 6.
FIG. 8 is a cross-sectional view of a child safety seat during rotation of a rotary disc according to an embodiment of the present invention.
FIG. 9 is an enlarged view of part D in FIG. 8.
FIG. 10 is a cross-sectional view of a child safety seat facing backward in a locked state according to an embodiment of the present invention.
FIG. 11 is an enlarged view of part E in FIG. 8.
FIG. 12 is a partial structural view of a child safety seat according to an embodiment of the present invention.

### List of reference numerals:

1. base; 11. protruding column; 12. window; 2. rotary disc; 21. positioning groove; 22. brim; 3. release handle assembly; 31. handle body; 311. recessed groove; 312. sliding groove; 313. handle groove; 32. positioning plate; 33. first reset member; 34. rotating shaft; 4. accommodating space; 5. fastener; 6. second reset member.

### DETAILED DESCRIPTION OF THE EMBODIMENTS

To make the objectives, technical features, and advantages of the present invention more comprehensible, specific embodiments of the present invention will be described in detail below with reference to the accompanying drawings.

In the description of the present invention, it should be understood that orientation or position relationships indicated by the terms such as "up" and "down" are orientation or position relationships based on the normal use of the product.

The terms "first" and "second" are used herein for descriptive purposes, and are not intended to indicate or imply relative importance or implicitly point out the number of the indicated technical features. Therefore, the feature defined by "first" or "second" may explicitly or implicitly include at least one such feature. In the drawings of the embodiments of the present invention, a coordinate system YZ is provided, where the positive direction of the Y axis represents front, the negative direction of the Y axis represents rear, the positive direction of the Z axis represents up, and the negative direction of the Z axis represents down.

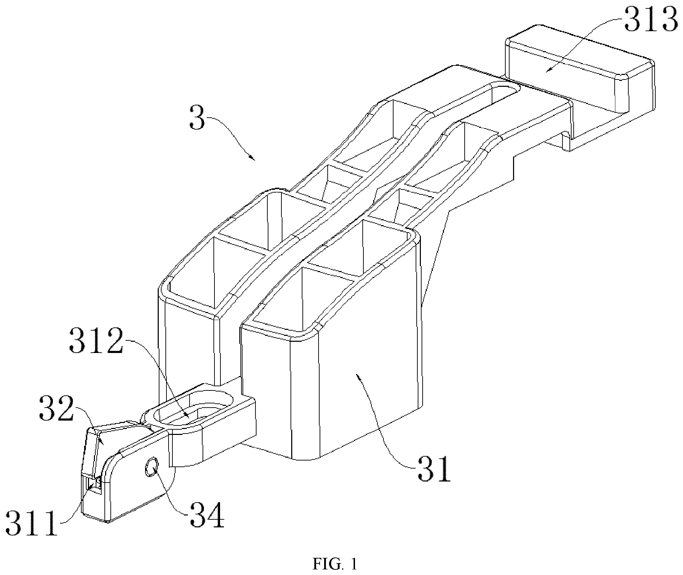

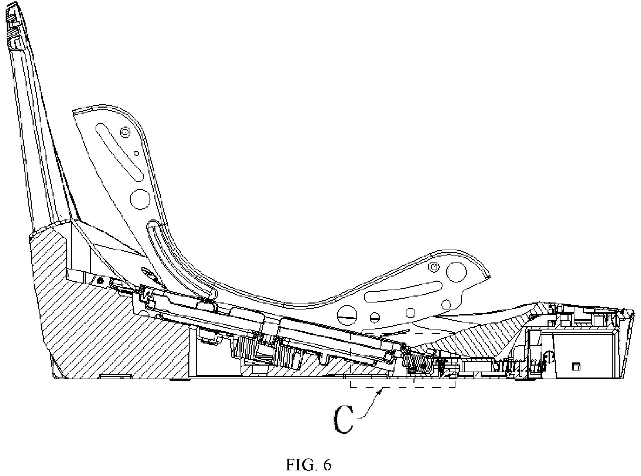

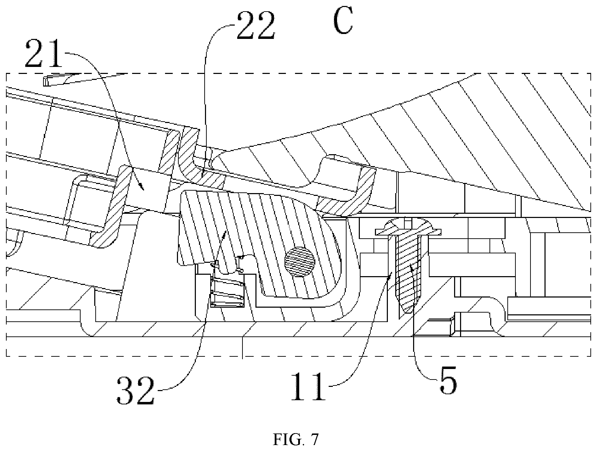

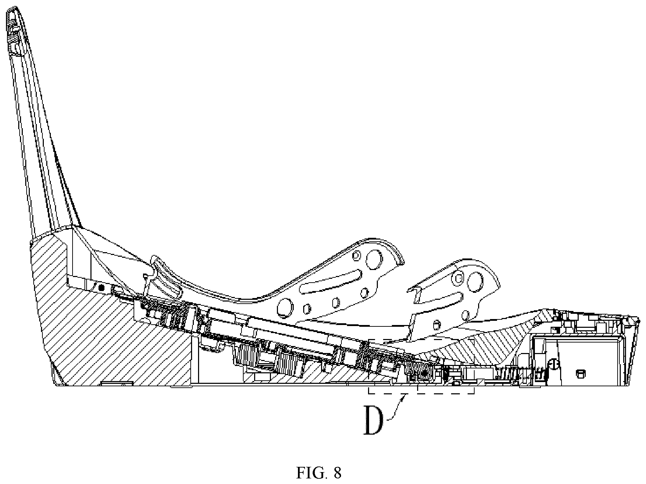

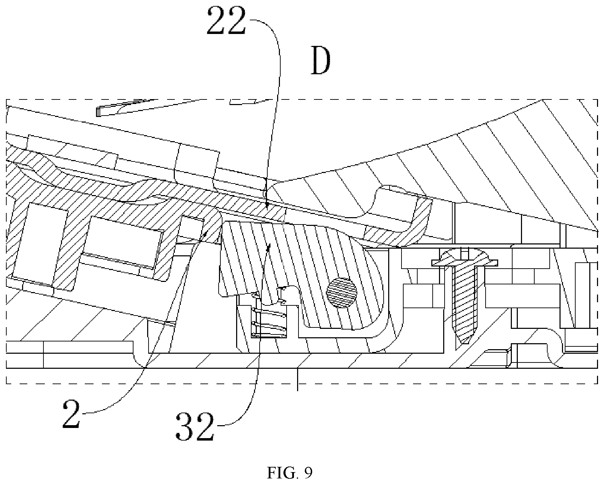

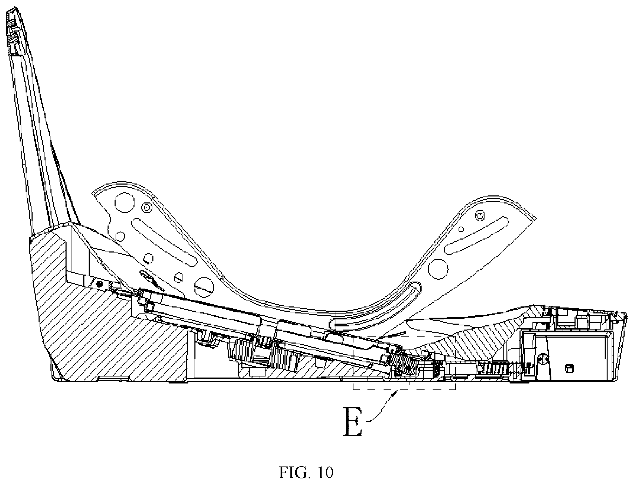

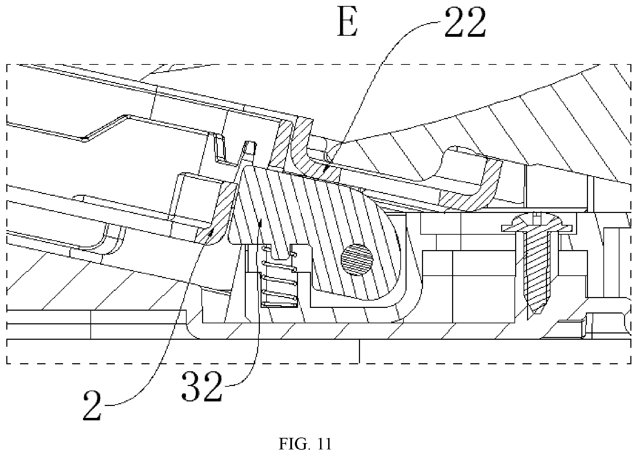

An embodiment of the present invention provides a seat rotation adjustment structure. Referring to FIG. 1, FIG. 2, FIG. 3, FIG. 4, and FIG. 6 to FIG. 11, the seat rotation adjustment structure includes a base 1 and a rotary disc 2 rotatably connected to the base 1. A release handle assembly 3 is mounted on the base 1. The release handle assembly 3 includes a handle body 31, a positioning plate 32, and a first reset member 33. The handle body 31 is connected to the base 1 in a forward and backward movable manner. A front end of the positioning plate 32 is hingedly connected to the handle body 31, and a rear end of the positioning plate 32 is connected to the first reset member 33. An accommodating space 4 configured for restricting a movement of the positioning plate 32 is formed between the rotary disc 2 and the base 1. A dimension of the accommodating space 4 in a vertical direction gradually decreases from a rear end to a front end. A plurality of positioning grooves 21 configured for engaging with the positioning plate 32 are provided on the rotary disc 2. When the positioning plate 32 is aligned with a positioning groove 21 of the positioning grooves 21, the positioning plate 32 is pushed by the handle body 31 and the first reset member 33 to lock to the positioning groove 21. After the handle body 31 is pulled forward to allow the positioning plate 32 to disengage from the positioning groove 21, the positioning plate 32 completely enters the accommodating space 4, thus achieving a rotation of the rotary disc 2 relative to the base 1.

The base 1 is configured to be fixedly connected to a seat in a vehicle. The rotary disc 2 is a round disc structure. The rotary disc 2 is configured to be connected to a bottom of a child safety seat. The plurality of positioning grooves 21 are circumferentially provided at intervals on the rotary disc 2, so that the rotary disc 2 can be locked at different positions. In this embodiment, two positioning grooves 21 are provided, and the two positioning grooves 21 are symmetrically arranged at a front end and a rear end of the rotary disc 2, respectively, so that the child safety seat can be positioned at a position facing a forward direction of the vehicle or at a position facing away from the forward direction of the vehicle. The positioning grooves 21 are elongated rectangular grooves, and the positioning plate 32 is a plate-like structure in the shape of a digit 7, to ensure that when the positioning plate 32 is engaged with a positioning groove 21 of the positioning grooves 21, the base 1 and the rotary disc 2 can be firmly fixed relative to each other. The positioning plate 32 has a certain thickness, so that the positioning plate 32 has certain deformation resistance. The thickness of the positioning plate 32 is slightly less than a width of each of the positioning grooves 21, so that the positioning plate 32 can be smoothly locked to or disengaged from the positioning groove 21.

Atop of the positioning plate 32 is pressed against the rotary disc 2 all the time. When the rotary disc 2 needs to be unlocked for rotation, a user pulls the handle body 31 to drive the positioning plate 32 to move forward. In this process, the positioning plate 32 is disengaged from the positioning groove 21, and the top of the positioning plate 32 receives a downward pressure, so that the rear end of the positioning plate 32 rotates downward about the front end of the positioning plate 32. The first reset member 33 is compressed by a pressure from the positioning plate 32. When the user rotates the rotary disc 2, the user releases the force exerted on the handle body 31. In this case, the rear end of the positioning plate 32 is pressed against the rotary disc 2 and is limited in the accommodating space 4. When the rotary disc 2 rotates until the next positioning groove 21 is aligned with the positioning plate 32, the handle body 31 moves backward toward an original position and drives the positioning plate 32 to move backward, and the rear end of the positioning plate 32 rotates upward about the front end of the positioning plate 32 under an elastic restoring force of the first reset member 33 to enter the positioning groove 21, and is locked to the positioning groove 21. Thus, a seat position switching operation is completed.

In the seat rotation adjustment structure of this embodiment, the release handle assembly 3 is arranged on the base 1, the plurality of positioning grooves 21 configured for engaging with the positioning plate 32 of the release handle assembly 3 are arranged on the rotary disc 2, and through the movement of the handle body 31 and the restriction of the movement of the positioning plate 32 by the accommodating space 4, the positioning plate 32 can be locked to or disengaged from a positioning groove 21 of the positioning grooves 21, so that the position of the rotary disc 2 can be changed to achieve seat rotation and locking. Such a design involves a simple structure, a small number of parts, and low improvement costs, and is suitable for use in a wide range of applications for improvement. In addition, rotation and locking operations are convenient and stable, so that high operation efficiency is achieved, thereby improving user experience.

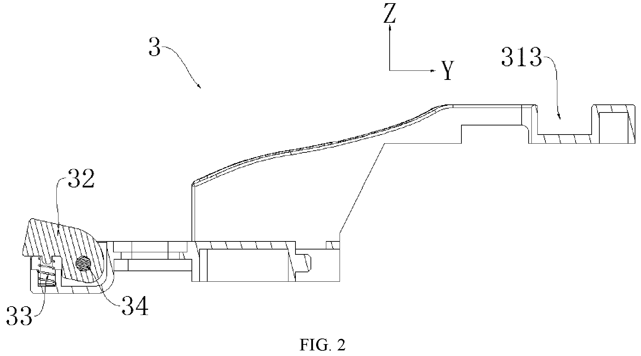

Optionally, as shown in FIG. 1 and FIG. 2, a recessed groove 311 configured for mounting the positioning plate 32 is provided on the handle body 31, and an upper end and a lower end of the first reset member 33 are respectively pressed against the positioning plate 32 and a bottom of the recessed groove 311.

The thickness of the positioning plate 32 is slightly less than a width of the recessed groove 311, so that the positioning plate 32 can freely move in the recessed groove 311. The recessed groove 311 is a structure with an opening facing upward, a rear end of the recessed groove 311 is perforated, and the rear end of the positioning plate 32 extends out of the rear end of the recessed groove 311, so that the rear end of the positioning plate 32 can be engaged with the rotary disc 2. The first reset member 33 is a compression restoring spring. The recessed groove 311 is provided with a mounting hole configured for mounting the first reset member 33. A boss configured for engaging with the first reset member 33 is arranged on the positioning plate 32. In this embodiment, the recessed groove 311 is provided on the handle body 31, and the first reset member 33 is mounted between the recessed groove 311 and the positioning plate 32, so that the first reset member 33 can always stably act on the positioning plate 32 during the movement of the release handle assembly 3, thereby ensuring the stability of position switching between the positioning plate 32 and the rotary disc 2.

Optionally, as shown in FIG. 1 and FIG. 2, the release handle assembly 3 further includes a rotating shaft 34, and the positioning plate 32 is hingedly connected to the handle body 31 through the rotating shaft 34.

Holes for mounting the rotating shaft 34 are provided on a wall of the recessed groove 311. A hole for the rotating shaft 34 to pass through is also provided on the positioning plate 32. The front end of the positioning plate 32 is hingedly connected to the handle body 31 through the rotating shaft 34. Such a hinged connection structure is simple and achieves a stable and reliable operation of rotating the positioning plate 32 relative to the handle body 31.

Optionally, as shown in FIG. 1, FIG. 2, FIG. 3, and FIG. 4, a sliding groove 312 is provided on the handle body 31, and a protruding column 11 configured for engaging with the sliding groove 312 is arranged on the base 1.

The length direction of the sliding groove 312 is consistent with the front-rear direction. The protruding column 11 is arranged to be perpendicular to the front-rear direction. When the handle body 31 does not receive an external force exerted by the user, the positioning plate 32 is locked to a positioning groove 21 of the positioning grooves 21. In this case, the protruding column 11 is pressed against a front end of the sliding groove 312. When the user pulls the handle body 31 to move forward to allow the positioning plate 32 to disengage from the positioning groove 21, the protruding column 11 is pressed against a rear end of the sliding groove 312. In this embodiment, with the design of the protruding column 11 and the sliding groove 312 that are slidably connected to each other, the slidable connection between the handle body 31 and the base 1 in the front-rear direction is realized, and the handle body 31 will not tilt during the sliding process, thereby ensuring that the positioning plate 32 can be accurately aligned and engaged with the positioning groove 21 during the state switching of the rotary disc 2.

Optionally, as shown in FIG. 1, FIG. 2, FIG. 3, and FIG. 4, the protruding column 11 is connected to a fastener 5 configured for limiting a vertical movement of the handle body 31.

The fastener 5 is configured to limit a vertical movement of the protruding column 11 relative to the sliding groove 312, i.e., prevent the handle body 31 from moving vertically relative to the base 1. The fastener 5 is preferably a screw having a threaded rod and a screw cap. A diameter of the screw cap is greater than a width of the sliding groove 312.

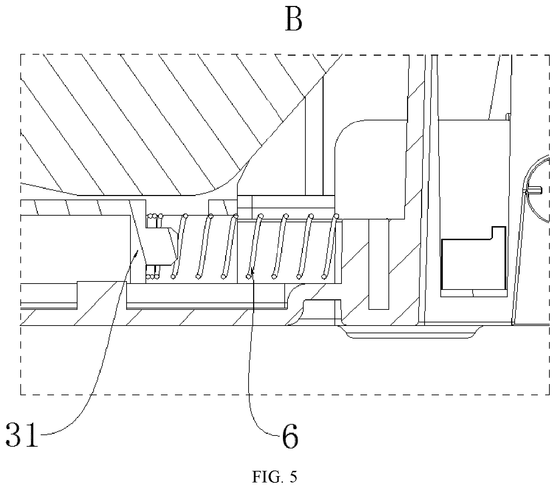

Optionally, as shown in FIG. 1, FIG. 2, FIG. 3, and FIG. 5, a second reset member 6 configured for pushing the handle body 31 to move backward is arranged between the handle body 31 and the base 1.

The second reset member 6 is a compression restoring spring. When the user pulls the handle body 31 to drive the positioning plate 32 to move forward, the second reset member 6 is compressed by a forward thrust from the handle body 31. When the user releases the force exerted on the handle body 31, the handle body 31 moves backward to the original position under an elastic restoring force of the second reset member 6, so that the positioning plate 32 can enter and be locked to the positioning groove 21. In this embodiment, with the additional arrangement of the second reset member 6 between the handle body 31 and the base 1, the handle body 31 can automatically move back to the original position and push the positioning plate 32 to lock to the positioning groove 21 when not receiving an external force exerted by the user. Such a structure is simple and reliable.

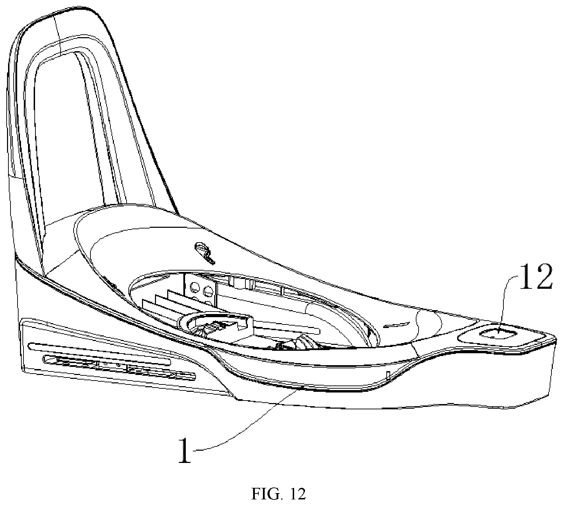

Optionally, as shown in FIG. 1, FIG. 2, and FIG. 12, a handle groove 313 is provided at a front end of the handle body 31, and a window 12 configured for exposing the handle groove 313 is provided on the base 1.

The handle groove 313 is provided at a front end of the handle body 31, and the corresponding window 12 is also provided at a front end of the base 1, so as not to affect the user's operation on the handle body 31 during the state switching of the child safety seat. The handle groove 313 provided also makes it convenient for the user to operate the handle body 31.

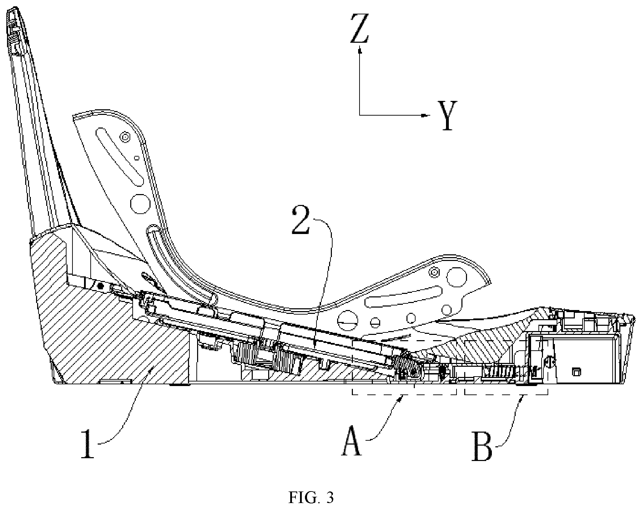

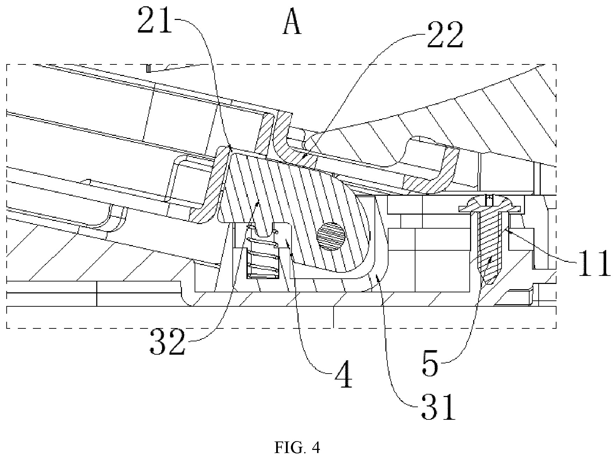

Optionally, as shown in FIG. 3 and FIG. 4, a brim 22 is arranged on a peripheral wall of the rotary disc 2, and the accommodating space 4 is formed between the brim 22 and the base 1.

The brim 22 is located outside the positioning grooves 21. When the positioning plate 32 is locked to a positioning groove 21 of the positioning grooves 21, the top of the positioning plate 32 is pressed against both the positioning groove 21 and the brim 22 under the elastic restoring force of the first reset member 33. When the positioning plate 32 is disengaged from the positioning groove 21 and the rotary disc 2 is rotated, the top of the positioning plate 32 is pressed against the brim 22, and the rear end of the positioning plate 32 is pressed against an edge of the positioning groove 21. Through holes are evenly provided at intervals on the brim 22 to reduce the overall weight of the rotary disc 2, making it convenient for the user to rotate the child safety seat.

Optionally, as shown in FIG. 3 and FIG. 4, a distance between the brim 22 and the base 1 gradually decreases from a rear end to a front end.

The accommodating space 4 gradually shrinks from a rear end to a front end, i.e., the rotary disc 2 is inclined downward from a rear end to a front end relative to the base 1. In this way, during the handle body 31 driving the positioning plate 32 to move forward, because space for vertical movement of the positioning plate 32 in the accommodating space 4 is becoming smaller, the rear end of the positioning plate 32 can rotate downward about the front end of the positioning plate 32 under a pressure from the brim 22 until the positioning plate 32 is completely disengaged from the positioning groove 21, so that the rotary disc 2 can rotate relative to the base 1. In this embodiment, the accommodating space 4 gradually shrinking from a rear end to a front end is designed by using the positional relationship between the brim 22 and the base 1, so that in the process of moving forward, the positioning plate 32 can be rotated by a pressure from the rotary disc 2 and limited in the accommodating space 4, thereby ensuring a smooth rotation of the rotary disc 2. Such a structure is simple and easy to operate.

Another embodiment of the present invention provides a child safety seat, including the seat rotation adjustment structure described above.

A fixing hook configured for mounting an edge of the rotary disc 2 and a positioning mechanism configured for rotatably connecting the rotary disc 2 to the base 1 are mounted in the base 1. The rotary disc 2 is mounted with an axis center on the positioning mechanism as the center of circle. A slide rail fixing plate is fixed to the rotary disc 2 through a fastening screw. The child safety seat is fixed to the slide rail fixing plate. When the rotary disc 2 is rotated, the child safety seat can be driven to rotate through the slide rail fixing plate.

In the child safety seat of this embodiment, the release handle assembly 3 is arranged on the base 1, the plurality of positioning grooves 21 configured for engaging with the positioning plate 32 of the release handle assembly 3 are arranged on the rotary disc 2, and through the movement of the handle body 31 and the restriction of the movement of the positioning plate 32 by the accommodating space 4, the positioning plate 32 can be locked to or disengaged from a positioning groove 21 of the positioning grooves 21, so that the position of the rotary disc 2 can be changed to achieve seat rotation and locking. Such a design involves a simple structure, a small number of parts, and low improvement costs, and is suitable for use in a wide range of applications for improvement. In addition, rotation and locking operations are convenient and stable, so that high operation efficiency is achieved, thereby improving user experience.

Although the present invention has been disclosed above, the scope of protection of the present invention is not limited thereto. Those skilled in the art can make various changes and modifications without departing from the scope of the present invention which is defined by the appended claims. Such changes and modifications also fall within the scope of protection of the present invention.

## Claims

1. A seat rotation adjustment structure comprising a base (1) and a rotary disc (2) rotatably connected to the base (1), wherein a release handle assembly (3) is mounted on the base (1); the release handle assembly (3) comprises a handle body (31), a positioning plate (32), and a first reset member (33); the handle body (31) is connected to the base (1) in a forward and backward movable manner; a front end of the positioning plate (32) is hingedly connected to the handle body (31), and a rear end of the positioning plate (32) is connected to the first reset member (33); an accommodating space (4) configured for restricting a movement of the positioning plate (32) is formed between the rotary disc (2) and the base (1); a plurality of positioning grooves (21) configured for engaging with the positioning plate (32) are provided on the rotary disc (2); when the positioning plate (32) is aligned with a positioning groove (21) of the positioning grooves (21), the positioning plate (32) is pushed by the handle body (31) and the first reset member (33) to lock to the positioning groove (21); and after the handle body (31) is pulled forward to allow the positioning plate (32) to disengage from the positioning groove (21), the positioning plate (32) completely enters the accommodating space (4), to achieve a rotation of the rotary disc (2) relative to the base (1).

2. The seat rotation adjustment structure according to claim 1, **characterized in that** a recessed groove (311) configured for mounting the positioning plate (32) is provided on the handle body (31), and an upper end and a lower end of the first reset member (33) are respectively pressed against the positioning plate (32) and a bottom of the recessed groove (311).

3. The seat rotation adjustment structure according to claim 1, **characterized in that** the release handle assembly (3) further comprises a rotating shaft (34), and the positioning plate (32) is hingedly connected to the handle body (31) through the rotating shaft (34).

4. The seat rotation adjustment structure according to claim 1, **characterized in that** a sliding groove (312) is provided on the handle body (31), and a protruding column (11) configured for engaging with the sliding groove (312) is arranged on the base (1).

5. The seat rotation adjustment structure according to claim 4, **characterized in that** the protruding column (11) is connected to a fastener (5) configured for limiting a vertical movement of the handle body (31).

6. The seat rotation adjustment structure according to claim 1, **characterized in that** a second reset member (6) configured for pushing the handle body (31) to move backward is arranged between the handle body (31) and the base (1).

7. The seat rotation adjustment structure according to claim 1, **characterized in that** a handle groove (313) is provided at a front end of the handle body (31), and a window (12) configured for exposing the handle groove (313) is provided on the base (1).

8. The seat rotation adjustment structure according to any one of claims 1 to 7, **characterized in that** a brim (22) is arranged on a peripheral wall of the rotary disc (2), and the accommodating space (4) is formed between the brim (22) and the base (1).

9. The seat rotation adjustment structure according to claim 8, **characterized in that** a distance between the brim (22) and the base (1) gradually decreases from a rear end to a front end.

10. A child safety seat, **characterized by** comprising the seat rotation adjustment structure according to any one of claims 1 to 9.

## Patentansprüche

1. Sitzdrehverstellstruktur, umfassend eine Basis (1) und eine Drehscheibe (2), die drehbar mit der Basis (1) verbunden ist, wobei eine Entriegelungsgriffanordnung (3) an der Basis (1) angebracht ist und diese Entriegelungsgriffanordnung (3) einen Griffkörper (31), eine Positionierungsplatte (32) und ein erstes Rückstellelement (33) umfasst; wobei der Griffkörper (31) mit der Basis (1) vor- und rückwärts verschiebbar verbunden ist, ein vorderes Ende der Positionierungsplatte (32) gelenkig mit dem Griffkörper (31) verbunden ist, und ein hinteres Ende der Positionierungsplatte (32) mit dem ersten Rückstellelement (33) verbunden ist; wobei ein Aufnahmeraum (4), der so konfiguriert ist, dass er eine Bewegung der Positionierungsplatte (32) einschränkt, zwischen der Drehscheibe (2) und der Basis (1) ausgebildet ist; eine Vielzahl von Positionierungsnuten (21), die so konfiguriert sind, dass sie mit der Positionierungsplatte (32) in Eingriff kommen, in der Drehscheibe (2) vorgesehen sind; wobei, wenn die Positionierungsplatte (32) mit einer Positionierungsnut (21) der Positionierungsnuten (21) ausgerichtet ist, die Positionierungsplatte (32) durch den Griffkörper (31) und das erste Rückstellelement (33) gedrückt wird, um in der Positionierungsnut (21) zu arretieren, und wobei, nachdem der Griffkörper (31) nach vorne gezogen wurde, damit sich die Positionierungsplatte (32) aus der Positionierungsnut (21) lösen kann, die Positionierungsplatte (32) vollständig in den Aufnahmeraum (4) gelangt, um eine Drehung der Drehscheibe (2) relativ zur Basis (1) zu erreichen.

2. Sitzdrehverstellstruktur nach Anspruch 1, **dadurch gekennzeichnet, dass** im Griffkörper (31) eine vertiefte Nut (311) vorgesehen ist, die zur Anbringung der Positionierungsplatte (32) konfiguriert ist, und ein oberes Ende und ein unteres Ende des ersten Rückstellelements (33) jeweils gegen die Positionierungsplatte (32) und einen Boden der vertieften Nut (311) gepresst werden.

3. Sitzdrehverstellstruktur nach Anspruch 1, **dadurch gekennzeichnet, dass** die Entriegelungsgriffanordnung (3) ferner eine Drehwelle (34) umfasst, und die Positionierungsplatte (32) über die Drehwelle (34) gelenkig mit dem Griffkörper (31) verbunden ist.

4. Sitzdrehverstellstruktur nach Anspruch 1, **dadurch gekennzeichnet, dass** am Griffkörper (31) eine Gleitnut (312) vorgesehen ist, und an der Basis (1) eine vorstehende Säule (11) angeordnet ist, die zum Eingriff mit der Gleitnut (312) konfiguriert ist.

5. Sitzdrehverstellstruktur nach Anspruch 4, **dadurch gekennzeichnet, dass** die vorstehende Säule (11) mit einem Befestigungselement (5) verbunden ist, das zur Begrenzung einer vertikalen Bewegung des Griffkörpers (31) konfiguriert ist.

6. Sitzdrehverstellstruktur nach Anspruch 1, **dadurch gekennzeichnet, dass** zwischen dem Griffkörper (31) und der Basis (1) ein zweites Rückstellelement (6) angeordnet ist, das so konfiguriert ist, dass es den Griffkörper (31) zur Rückwärtsbewegung drückt.

7. Sitzdrehverstellstruktur nach Anspruch 1, **dadurch gekennzeichnet, dass** an einem vorderen Ende des Griffkörpers (31) eine Griffnut (313) und an der Basis (1) ein Fenster (12) vorgesehen ist, das so konfiguriert ist, dass es die Griffnut (313) freilegt.

8. Sitzdrehverstellstruktur nach einem der Ansprüche 1 bis 7, **dadurch gekennzeichnet, dass** an einer Umfangswand der Drehscheibe (2) ein Rand (22) angeordnet ist, wobei der Aufnahmeraum (4) zwischen dem Rand (22) und der Basis (1) ausgebildet ist.

9. Sitzdrehverstellstruktur nach Anspruch 8, **dadurch gekennzeichnet, dass** der Abstand zwischen dem Rand (22) und der Basis (1) vom hinteren Ende zum vorderen Ende hin kontinuierlich abnimmt.

10. Kindersicherheitssitz, **dadurch gekennzeichnet, dass** er eine Sitzdrehverstellstruktur nach einem der Ansprüche 1 bis 9 umfasst.

## Revendications

1. Structure de réglage de rotation pour un siège, comprenant une base (1) et un disque rotatif (2) relié de manière rotative à la base (1), dans laquelle un ensemble de poignée de libération (3) est monté sur la base (1) ; l'ensemble de poignée de libération (3) comprend un corps de poignée (31), une plaque de positionnement (32), et un premier élément de rappel (33) ; le corps de poignée (31) est relié à la base (1) de manière de se déplacer vers l'avant et l'arrière ; une extrémité avant de la plaque de positionnement (32) est reliée par articulation au corps de poignée (31), et une extrémité arrière de la plaque de positionnement (32) est reliée au premier élément de rappel (33) ; un espace d'accueil (4) configuré pour limiter un mouvement de la plaque de positionnement (32) est formé entre le disque rotatif (2) et la base (1) ; une pluralité de rainures de positionnement (21) configurées pour s'engager avec la plaque de positionnement (32) sont prévues sur le disque rotatif (2) ; lorsque la plaque de positionnement (32) est alignée avec une rainure de positionnement (21) parmi les rainures de positionnement (21), la plaque de positionnement (32) est poussée par le corps de poignée (31) et le premier élément de rappel (33) pour se verrouiller à la rainure de positionnement (21) ; et après que le corps de poignée (31) est tiré vers l'avant pour permettre à la plaque de positionnement (32) de se désengager de la rainure de positionnement (21), la plaque de positionnement (32) entre complètement dans l'espace d'accueil (4), permettant ainsi une rotation du disque rotatif (2) par rapport à la base (1).

2. Structure de réglage de rotation pour un siège selon la revendication 1, **caractérisée en ce qu'**une rainure en retrait (311) configurée pour monter la plaque de positionnement (32) est prévue sur le corps de poignée (31), et qu'une extrémité supérieure et une extrémité inférieure du premier élément de rappel (33) s'appuient contre la plaque de positionnement (32) et un fond de la rainure en retrait (311) respectivement.

3. Structure de réglage de rotation pour un siège selon la revendication 1, **caractérisée en ce que** l'ensemble de poignée de libération (3) comprend en outre un arbre rotatif (34), et que la plaque de positionnement (32) est reliée par articulation au corps de poignée (31) par l'intermédiaire de l'arbre rotatif (34).

4. Structure de réglage de rotation pour un siège selon la revendication 1**caractérisée en ce qu'**une rainure de coulissement (312) est prévue sur le corps de poignée (31), et qu'une colonne en saillie (11) configurée pour s'engager avec la rainure de coulissement (312) est disposée sur la base (1).

5. Structure de réglage de rotation pour un siège selon la revendication 4, **caractérisée en ce que** la colonne en saillie (11) est reliée à une attache (5) configurée pour limiter un mouvement vertical du corps de poignée (31).

6. Structure de réglage de rotation pour un siège selon la revendication 1**caractérisée en ce qu'**un second élément de rappel (6) configuré pour pousser le corps de poignée (31) à se déplacer vers l'arrière est disposé entre le corps de poignée (31) et la base (1).

7. Structure de réglage de rotation pour un siège selon la revendication 1**caractérisée en ce qu'**une rainure de poignée (313) est prévue à une extrémité avant du corps de poignée (31), et qu'une fenêtre (12) configurée pour exposer la rainure de poignée (313) est prévue sur la base (1).

8. Structure de réglage de rotation pour un siège selon l'une quelconque des revendications 1 à 7, **caractérisée en ce qu'**une bordure (22) est disposée sur une paroi périphérique du disque rotatif (2), et que l'espace d'accueil (4) est formé entre la bordure (22) et la base (1).

9. Structure de réglage de rotation pour un siège selon la revendication 8, **caractérisée en ce qu'**une distance entre la bordure (22) et la base (1) diminue progressivement d'une extrémité arrière à une extrémité avant.

10. Siège de sécurité pour enfant, **caractérisé par** comprenant la structure de réglage de rotation pour un siège selon l'une quelconque des revendications 1 à 9.
